# EUROPÄISCHE PATENTSCHRIFT

(11) **EP 2 344 805 B1**
(45) Veröffentlichungstag und Bekanntmachung des Hinweises auf die Patenterteilung: **02.04.2014**
(21) Anmeldenummer: 09756247.4
(22) Anmeldetag: 13.10.2009
(51) Int. Cl.: F16L 59/147

(54) **WÄRMEGEDÄMMTES ROHR**
THERMALLY INSULATED TUBE
TUBE A ISOLATION THERMIQUE

(30) Priorität: 14.10.2008 DE 202008013488 U
(43) Veröffentlichungstag der Anmeldung: 20.07.2011
(73) Patentinhaber: Rehau AG & Co, 95111 Rehau (DE)
(72) Erfinder: LÜNSTEDT, Frank, 90491 Nürnberg (DE); LIEBEL, Volker, 91058 Erlangen (DE); WINTER, Karlheinz, 95111 Rehau (DE); OELSCHLEGEL, Alexander, 95176 Konradsreuth (DE)
(86) Internationale Anmeldenummer: PCT/EP2009/007335
(87) Internationale Veröffentlichungsnummer: WO 2010/043367

(56) Entgegenhaltungen:
- WO-A1-2008/116625
- WO-A2-2004/039574
- DE-A1- 19 941 746
- DE-U- 7 044 627
- US-A- 4 351 366

## Beschreibung

Die Erfindung betrifft eine Rohranordnung insbesondere zur Verwendung in Nahwärmenetzen.

Bekannt sind gattungsgemäße Rohranordnungen, die aus mindestens einem ein Medium führendes Rohr, einer Wärmedämmung aus Polyethylen-Schaum und einem Außenmantel bestehen, der als Wellrohr ausgeführt ist.

Die US 4,351,366 offenbart ein wärmegedämmtes Rohr, mit einem Mantel aus wärmeisolierendem, geschäumtem Material, das um das Rohr angeordnet ist und das Material ist mit Fäden umwickelt, die den Mantel örtlich entlang ringförmiger Linien deformieren, und um das Material ist ein rohrförmiger Film angeordnet, der einen Kontakt zum deformierten Mantel aufweist.

Die DE 70 44 627 U lehrt eine Rohrisolierung mit einem mehrteiligen Außenmantel und mehrteiliger Schaumstofffüllung und schlägt zugkraftlose beziehungsweise nicht auf Zugkraft beanspruchte Verbindungen für den aus Halbschalen zusammengesetzten Außenmantel vor.

Nachteilig bei dieser Ausführung ist der dünne Außenmantel, der im Baustellenbetrieb schnell beschädigt wird, und der dann nicht mehr sicher stellen kann, dass Bodenfeuchtigkeit oder Regen- oder Grundwasser in das Rohr eindringt und die Wärmedämmwirkung beeinträchtigt.

Aufgabe der vorliegenden Erfindung ist es daher, eine Rohranordnung bereitzustellen, die die geschilderten Nachteile überwindet und eine ausreichende Flexibilität bei gleichzeitig hoher Robustheit gewährleistet.

Um diesen erheblichen Nachteil des Standes der Technik zu überwinden, sieht die Erfindung eine Rohranordnung vor, bei der die Wärmedämmschicht in Form einer Schaumschicht, die polymeres Material enthält, eine äußere ring- oder schraubenförmige Profilierung aufweist und der Außenmantel aus einer koextrudierten polymeren Schicht ausreichender Dicke besteht, der der Kontur der Profilierung der Schaumschicht folgt.
Die äußere Profilierung ist dabei auf der Oberfläche der Wärmedämmschicht angeordnet, die vom Lumen des Medienrohres abgewandt ist, also in Richtung des umgebenden Raumes weist.

Durch diesen Aufbau der Rohranordnung wird eine ausreichende Flexibilität bei gleichzeitig guter Robustheit erreicht.

Die Profilierung der Schaumschicht kann durch eine Einschnürung erfolgen.

Diese Einschnürung kann durch ein schraubenförmiges Umwickeln der Schaumschicht mit Komponenten, wie Bändern, Schnüren, Schläuchen, Schaumprofilen und dergleichen erzeugt werden.
Weiterhin kann die erfindungsgemäße Profilierung dadurch erfolgen, dass die äußere Schaumschicht durch Komponenten, wie ringförmige aufgebrachte Elemente, ausgewählt aus Bändern, Schnüren, Schläuchen, Schaumprofilen oder Formteilen eingeschnürt werden.

In einer vorteilhaften alternativen Ausführungsform der Erfindung wird die Profilierung der äußeren Schaumschicht dadurch erreicht, dass Komponenten, wie die vorgenannten Bänder, Schnüre, Schläuche, Schaumprofile oder Formteile die äußere Schaumschicht nicht einschnüren, sondern eine erhabene Profilierung bewirken.

Weiterhin kann die Profilierung der äußeren Schaumschicht nach einer weiteren bevorzugten Ausführungsform der Erfindung auch dadurch realisiert sein, dass dort mechanisch oder thermisch Nuten eingebracht sind.

Schließlich umfasst die Erfindung auch eine Rohranordnung, bei der die äußere Schaumschicht bereits mit der erforderlichen Profilierung hergestellt ist.

Der Außenmantel der erfindungsgemäßen Rohranordnung besteht bevorzugt aus einem vernetzten oder unvernetzten Polyethylen (PE) oder PE-Copolymeren. In einer vorteilhaften Ausführungsform besteht der Außenmantel aus geschäumtem Polyethylen mit einer Dichte von etwa 500 kg/m³. Dieser Außenmantel ist bei gleichbleibender Flexibilität im Vergleich zu einem ungeschäumten Außenmantel robuster und trägt zusätzlich zur Wärmedämmwirkung bei.

Die Wärmedämmung zwischen Mediumrohr und Außenmantel kann ein- oder mehrlagig ausgeführt sein und aus einem oder verschiedenen Materialien bestehen.

Die Erfindung umfasst auch Ausführungsformen, die wenigstens eine Sperrschicht an oder in dem Außenmantel, an oder in der Wärmedämmung oder an oder in einer Lage der Wärmedämmung oder dem Mediumrohr aufweist, die insbesondere die Diffusion von Sauerstoff oder Wasserdampf oder Kohlenwasserstoffe be- oder verhindern sollen. Diese Sperrschichten können insbesondere polymeres, metallisches oder anorganisches Material enthalten.

Das Mediumrohr enthält bevorzugt Polyolefine, besonders bevorzugt ist vernetztes Polyethylen.

In einer weiter bevorzugten Ausführungsform der vorliegenden Erfindung enthält die Rohranordnung wenigstens einen elektrisch leitenden Abschnitt, der der Leck- bzw. Feuchtedetektion und / oder Signalübermittlung dient.
Damit kann ein Versagen der Wärmedämmung, beispielsweise durch eindringendes Wasser, zuverlässig detektiert werden.

Die erfindungsgemäße Rohranordnung kann in Wärmenetzen, im Bauwesen, in der Lebensmitteltechnik, in der Medizintechnik, in der Pharmatechnik, in der Landwirtschaft, in der Fischzucht oder in der Kraftwerkstechnik eingesetzt werden.

Nachfolgend beschriebene Ausführungsformen erläutern die Erfindung weiter, ohne sie jedoch auf diese Beispiele einzuschränken.

### Hierzu zeigen die Figuren:

- Fig. 1: eine teilweise geschnittene Seitenansicht der Rohranordnung;
- Fig. 2: eine teilweise geschnittene Seitenansicht der Rohranordnung;
- Fig. 3: eine teilweise geschnittene Seitenansicht der Rohranordnung;
- Fig. 4: eine teilweise geschnittene Seitenansicht der Rohranordnung;
- Fig. 5: eine teilweise geschnittene Seitenansicht der Rohranordnung;
- Fig. 6: ein ringförmiges Element in der Seitenansicht und im Schnitt;
- Fig. 7: den Verbindungsabschnitt eines Elementes in der Seitenansicht im Detail.

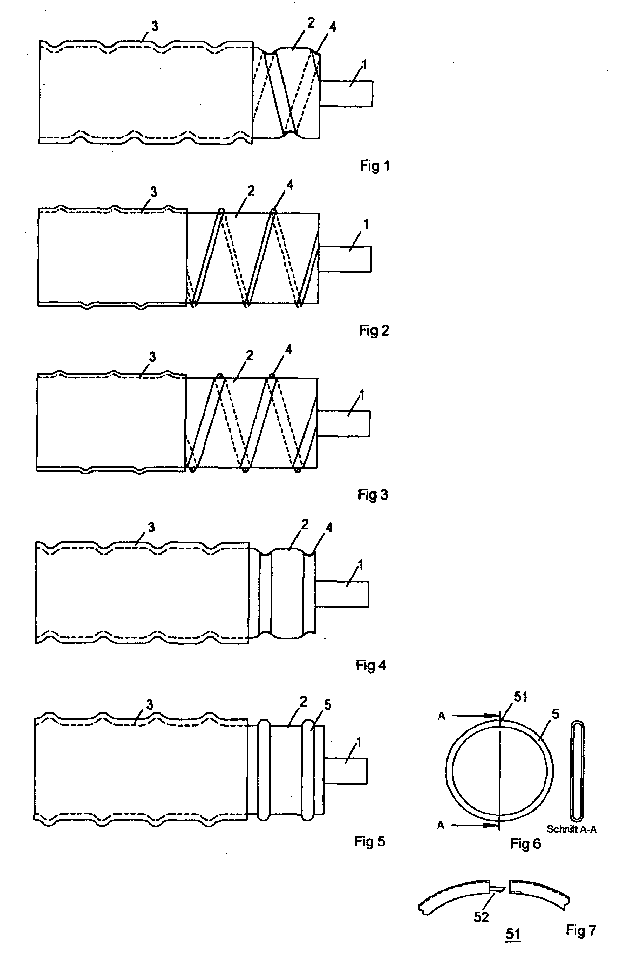

Fig. 1 zeigt eine Rohranordnung bestehend aus einem Mediumrohr (1) aus vernetztem Polyethylen, einer Wärmedämmschicht (2) aus PE-Schaum und einem Außenmantel (3) aus LLD-PE, bei der die Wärmedämmschicht (2) mittels eines schraubenförmig um die Wärmedämmschicht (2) gewickelten Bandes (4) aus PET (Polyethylenterephthalat) eingeschnürt ist. Der koextrudierte Außenmantel (3) folgt der dadurch erzeugten Kontur der Wärmedämmschicht (2) weitgehend.

Fig. 2 zeigt eine Rohranordnung bestehend aus einem Mediumrohr (1) aus Polybutylen, einer Wärmedämmschicht (2) aus PP-Schaum und einem Außenmantel (3) aus EVA (Ethylenvinylacetat), bei der die Wärmedämmschicht (2) mittels eines schraubenförmig auf die Wärmedämmschicht (2) gewickelten Schlauches (4) aus PE profiliert ist, wobei die Wärmedämmschicht (2) nicht eingeschnürt ist. Der koextrudierte Außenmantel (3) folgt der Kontur der Wärmedämmschicht (2) und des aufgewickelten Schlauches (4) weitgehend.

Fig. 3 zeigt eine Rohranordnung bestehend aus einem Mediumrohr (1) aus Polypropylen (PP), einer Wärmedämmschicht (2) aus PP-Schaum und einem Außenmantel (3) aus vernetztem PE, bei der die Wärmedämmschicht (2) mittels eines schraubenförmig auf die Wärmedämmschicht (2) gewickelten PE-Schaumprofiles (4) aus PE profiliert ist. Der koextrudierte Außenmantel (3) folgt der Kontur der Wärmedämmschicht (2) und des aufgewickelten Schaumprofiles (4) weitgehend.

Fig. 4 zeigt eine Rohranordnung bestehend aus einem Mediumrohr (1) aus vernetztem Polyethylen und einer Sauerstoffsperrschicht aus EVOH (Ethylenvinylalkohol), einer Wärmedämmschicht (2) aus mehreren Schichten aus vernetztem PE-Schaum mit einer Dichte von 50 kg/m³ und einem Außenmantel (3) aus geschäumtem PE mit einer Dichte von 500 kg/m³, bei der die Wärmedämmschicht (2) mittels Polypropylenbändern (4) profiliert ist, die die Wärmedämmschicht (2) einschnüren. Der koextrudierte Außenmantel (3) folgt der Kontur der so profilierten Wärmedämmschicht (2) weitgehend.

Fig. 5 zeigt eine Rohranordnung bestehend aus einem Mediumrohr (1) aus vernetztem Polyethylen und einer metallischen Sauerstoff- und Wasserdampfsperrschicht, einer Wärmedämmschicht (2) aus einer Schicht PU-Schaum (Polyurethan) und einer Schicht aus vernetztem PE-Schaum und einem Außenmantel (3) aus Ethylen-Methylacrylat, bei der auf der Wärmedämmschicht (2) ringförmige Profile (5) positioniert sind. Der koextrudierte Außenmantel (3) folgt der Kontur der so profilierten Wärmedämmschicht (2) weitgehend.

Fig. 6 zeigt ein ringförmiges Element (5) aus POM (Polyoxymethylen) in der Draufsicht und im Schnitt. Das Element (5) weist einen Verbindungsabschnitt (51) auf, an dem das Element (5) aufgebogen und über die Wärmedämmschicht (2) geschoben werden kann.

Fig. 7 zeigt den Verbindungsabschnitt (51) eines Elementes (5) aus PA (Polyamid) im Detail. Dieses Element (5) weist ein Verbindungselement (52) auf, mit dem der Verbindungsabschnitt (51) rastend verbunden wird. Das Verbindungselement (52) ist dabei hakenartig gestaltet, diese greift rastend in eine gegenüberliegende komplementäre Struktur am Verbindungsabschnitt (51) ein.

Verbindungselemente (52) ermöglichen Rohranordnungen, bei denen mehrteilige Elemente (5) vorgesehen sind. Diese sind dann in einfacher Weise von zwei Seiten montierbar, ohne das Element (5) bis auf den Durchmesser der Wärmedämmschicht (2) aufbiegen zu müssen.

## Patentansprüche

1. Rohranordnung, bestehend aus wenigstens einem Medienrohr (1), wenigstens einer Polyolefine enthaltende Wärmedämmschicht (2) und wenigstens einem Außenmantel (3), die **dadurch gekennzeichnet ist, dass** die Wärmedämmschicht (2) eine äußere Profilierung aufweist, der der Außenmantel (3) folgt, wobei die Rohranordnung Elemente (5) aufweist, die die Wärmedämmschicht (2) profilierend einschnürt und wenigstens ein als Formteil ausgebildetes Element (5) auf dieser angeordnet ist, **dadurch gekennzeichnet, dass** das Formteil Verbindungsabschnitte (51) aufweist, die mittels Rast- oder Klemmverbindungen (52) verbindbar sind.

2. Rohranordnung nach einem der vorgenannten Ansprüche, **dadurch gekennzeichnet, dass** die Profilierung ring- oder helixförmig ausgeführt ist.

3. Rohranordnung nach einem der vorgenannten Ansprüche, **dadurch gekennzeichnet, dass** der Außenmantel (3) Polyethylen oder ein Polyethylen-Copolymer enthält.

4. Rohranordnung nach Anspruch 3, **dadurch gekennzeichnet, dass** die Dichte des Polymermaterials des Außenmantels (3) annähernd 500 kg/m³, insbesondere 400 bis 700 kg/m³ beträgt.

5. Rohranordnung nach einem der vorgenannten Ansprüche, **dadurch gekennzeichnet, dass** die Wärmedämmschicht (2) mehrlagig ausgeführt ist.

6. Rohranordnung nach Anspruch 5, **dadurch gekennzeichnet, dass** die Lagen unterschiedliche Materialien enthalten.

7. Rohranordnung nach einem der vorgenannten Ansprüche, **dadurch gekennzeichnet, dass** das Mediumrohr (1) Polyolefine, bevorzugt vernetztes Polyethylen aufweist.

8. Rohranordnung nach einer der vorgenannten Ansprüche, **dadurch gekennzeichnet, dass** die Rohranordnung wenigstens eine Diffusionssperrschicht aufweist, die insbesondere die Permeation von Sauerstoff und / oder Wasserdampf und / oder Kohlenwasserstoffen reduziert oder verhindert.

9. Rohranordnung nach Anspruch 8, **dadurch gekennzeichnet, dass** die Diffusionssperrschicht polymeres, metallisches und / oder anorganisches Material enthält.

10. Rohranordnung nach einer der vorgenannten Ansprüche, **dadurch gekennzeichnet, dass** die Rohranordnung wenigstens einen elektrisch leitenden Abschnitt enthält, der der Leck- bzw. Feuchtedetektion und / oder Signalübermittlung dient.

11. Rohranordnung nach einem der Ansprüche 1 bis 10 zur Anwendung in Wärmenetzen, im Bauwesen, in der Lebensmitteltechnik, in der Medizintechnik, in der Pharmatechnik, in der Landwirtschaft, in der Fischzucht oder in der Kraftwerkstechnik.

## Claims

1. Tube assembly, comprising at least one media tube (1), at least one thermally insulating layer (2) containing polyolefins and at least one outer sheathing (3), which is **characterized in that** the thermally insulating layer (2) has an outer profiling, which follows the outer sheathing (3), the tube assembly having elements (5) that constrict the thermally insulating layer (2) in a profiling manner and at least one element (5) that is formed as a shaped part being arranged on said thermally insulating layer, **characterized in that** the shaped part has connecting portions (51), which can be connected by means of engaging or clamping connections (52).

2. Tube assembly according to one of the preceding claims, **characterized in that** the profiling is of an annular or helical configuration.

3. Tube assembly according to one of the preceding claims, **characterized in that** the outer sheathing (3) contains polyethylene or a polyethylene copolymer.

4. Tube assembly according to Claim 3, **characterized in that** the density of the polymer material of the outer sheathing (3) is approximately 500 kg/m3, in particular 400 to 700 kg/m3.

5. Tube assembly according to one of the preceding claims, **characterized in that** the thermally insulating layer (2) is of a multi-ply configuration.

6. Tube assembly according to Claim 5, **characterized in that** the plies contain different materials.

7. Tube assembly according to one of the preceding claims, **characterized in that** the media tube (1) comprises polyolefins, preferably crosslinked polyethylene.

8. Tube assembly according to one of the preceding claims, **characterized in that** the tube assembly has at least one diffusion barrier layer, which in particular reduces or prevents the permeation of oxygen and/or water vapour and/or hydrocarbons.

9. Tube assembly according to Claim 8, **characterized in that** the diffusion barrier layer contains polymeric, metallic and/or inorganic material.

10. Tube assembly according to one of the preceding claims, **characterized in that** the tube assembly contains at least one electrically conducting portion, which serves for the detection of leaks or moisture and/or for the transmission of signals.

11. Tube assembly according to one of Claims 1 to 10 for use in heating systems, in the construction industry, in food technology, in medical technology, in pharmaceutical technology, in agriculture, in fish farming or in power generation technology.

## Revendications

1. Agencement de tube, constitué d'au moins un tube de milieu (1), d'au moins une couche calorifuge (2) contenant des polyoléfines et d'au moins une enveloppe extérieure (3), lequel agencement est **caractérisé en ce que** la couche calorifuge (2) présente un profilage extérieur qui suit l'enveloppe extérieure (3), l'agencement de tube présentant des éléments (5) rétrécissant la couche calorifuge (2) en la profilant, et au moins un élément (5) réalisé sous forme de pièce moulée étant disposé sur celle-ci, **caractérisé en ce que** la pièce moulée présente des portions de connexion (51) qui peuvent être connectées au moyen de connexions par encliquetage ou par serrage (52).

2. Agencement de tube selon la revendication précédente, **caractérisé en ce que** le profilage est réalisé sous forme annulaire ou hélicoïdale.

3. Agencement de tube selon l'une quelconque des revendications précédentes, **caractérisé en ce que** l'enveloppe extérieure (3) contient du polyéthylène ou un copolymère de polyéthylène.

4. Agencement de tube selon la revendication 3, **caractérisé en ce que** la densité du matériau polymère de l'enveloppe extérieure (3) vaut approximativement 500 kg/m3, en particulier 400 à 700 kg/m3.

5. Agencement de tube selon l'une quelconque des revendications précédentes, **caractérisé en ce que** la couche calorifuge (2) est réalisée en plusieurs couches.

6. Agencement de tube selon la revendication 5, **caractérisé en ce que** les couches contiennent des matériaux différents.

7. Agencement de tube selon l'une quelconque des revendications précédentes, **caractérisé en ce que** le tube de milieu (1) présente des polyoléfines, de préférence du polyéthylène réticulé.

8. Agencement de tube selon l'une quelconque des revendications précédentes, **caractérisé en ce que** l'agencement de tube présente au moins une couche formant barrière à la diffusion, laquelle réduit ou empêche notamment la perméation d'oxygène et/ou de vapeur d'eau et/ou d'hydrocarbures.

9. Agencement de tube selon la revendication 8, **caractérisé en ce que** la couche formant barrière à la diffusion contient un matériau polymère, métallique et/ou inorganique.

10. Agencement de tube selon l'une quelconque des revendications précédentes, **caractérisé en ce que** l'agencement de tube contient au moins une portion électriquement conductrice, qui sert à la détection de fuites ou d'humidité et/ou à transmettre des signaux.

11. Agencement de tube selon l'une quelconque des revendications 1 à 10, destiné à être utilisé dans des réseaux de chauffage, dans des bâtiments, dans le secteur des produits alimentaires, dans le secteur médical, dans le secteur pharmaceutique, en agriculture, en pisciculture ou dans le secteur de l'énergie.
